# EUROPÄISCHE PATENTSCHRIFT

(11) **EP 0 358 188 B1**
(45) Veröffentlichungstag und Bekanntmachung des Hinweises auf die Patenterteilung: **15.01.1997**
(21) Anmeldenummer: 89116436.0
(22) Anmeldetag: 06.09.1989
(51) Int. Cl.: H01B 1/12, H01M 4/60, C08G 73/06

(54) **Elektrisch leitende Zusammensetzung mit Polyheteroaromaten und polymeren Sulfaten**
Electrically conductive composition with polyheteroaromates and polymer sulfates
Composition électriquement conductrice contenant des polyhétéroaromates et des sulfates polymères

(30) Priorität: 09.09.1988 CH 3374/88
(43) Veröffentlichungstag der Anmeldung: 14.03.1990
(73) Patentinhaber: Japat Ltd, CH-4057 Basel (CH)
(72) Erfinder: Wernet, Wolfang, Dr., D-7800 Freiburg (DE); Stoffer, Jean, F-68300 St. Louis (FR)
(74) Vertreter: Becker, Konrad

(56) Entgegenhaltungen:
- EP-A- 0 104 726
- EP-A- 0 129 070
- GB-A- 2 134 125
- US-A- 4 552 927

## Beschreibung

Die Erfindung betrifft eine Zusammensetzung aus (a) mindestens einem oxidierten polykationischen Polyheteroaromaten und b) mindestens einem Polyanion eines filmbildenden thermoplastischen Polymeren mit sulfatierten Alkoholgruppen 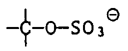 in wiederkehrenden Struktureinheiten, ein Verfahren zur Herstellung der Zusammensetzung, ein Verfahren zur Erhöhung der elektrischen Leitfähigkeit der Zusammensetzung, und die Verwendung der Zusammensetzung als elektrisch leitendes Material.

Es ist bekannt, dass man durch elektrochemische Polymerisation von Heteroaromaten, besonders Pyrrol, in Gegenwart nicht-nukleophiler Anionen elektrisch leitende Salze von polykationischen Polyheteroaromaten erhält. Die mechanischen Festigkeiten solcher in der Regel auf Anoden als Film abgeschiedener Salze von Polyheteroaromaten sind für viele Anwendungen ungenügend.

Zur Verbesserung der mechanischen Eigenschaften ist vorgeschlagen worden, Zusammensetzungen von dotierten Polyheteroaromaten in nicht-leitenden Polymeren zu verwenden, siehe z.B. Synthetic Metals, 22 (1987), 145-156; J. of Polym. Science: P.C.E., 23 (1985), 1687-1698, Bull. Chem. Soc. Jpn., 60, 3315-3320 (1987) und EP-A-0 191 726. Um die Mitverwendung von Dotierungsmitteln zu vermeiden, ist auch schon vorgeschlagen worden, bei der elektrochemischen Polymerisation nicht-nukleophile polymere Anionen mitzuverwenden, wie z.B. Polystyrolsulfonate, Polyvinylsulfonate (siehe z.B. EP-B-0 129 070 und US-A-4 552 927) oder Latices (siehe Synthetic Metals, 15 (1986), 175-182).

In der DE-A-3 402 133 werden poröse Zusammensetzungen aus Polypyrrol mit z.B. Alkylsulfaten beschrieben. Es wird erwähnt, dass auch Sulfate mit polymeren Resten verwendet werden können. In der GB-A-2 124 635 ist eine filmförmige Zusammensetzung aus Polypyrrol und einem chlorsulfonierten Polyvinylalkohol beschrieben. Der getrocknete Film besitzt zwar eine gute elektrische Leitfähigkeit und wird als zäh aber spröde bezeichnet, so dass er keine ausreichende mechanische Festigkeit besitzt.

In GB 2,134,125 werden Zusammensetzungen offenbart, in denen der Polyheteroaromat Polypyrrol oder ein Copolymer von Pyrrol ist. Als Polyanion werden u.a. Polyolefin-Sulfate und als Beispiel dafür Polyethylen-Sulfate genannt. Die Leitfähigkeit dieser Zusammensetzungen wird entweder als Film auf der Anode oder als kalt gepresster Formkörper aus einem zuvor in Stücke gebrochenen oder zermahlten Film bestimmt.

In EP 160,207 und EP 229,993 werden heterogene Zusammensetzungen beschrieben, in denen das Gegenion dispergiert, in Form einer Latex in die Polymerisation eingebracht wird. Als Monomere für das Polyanion werden ethylenartige ungesättigte Monomere mit u.a. einer Sulfatgruppe genannt. Auch bei diesen Zusammensetzungen wird die Leitfähigkeit entweder als Film oder als Formkörper aus einem zuvor in Stücke geschnittenen Film bestimmt. Die erhaltenen brüchigen Zusammensetzungen können nur in Anwesenheit eines organischen Lösungsmittels bearbeitet werden.

Bates et al. [Bates, N., Cross, M., Lines, R., Walton, D., J. Chem. Soc., Chem. Commun. 871-872 (1985)] und EP 104,726 offenbaren als Dotierungsmittel in Polypyrrol-Filmen polymere Sulfonsäuren, durch die die Filme nach Trocknung zwar flexibel blieben aber eine sehr schlechte Leitfähigkeit aufwiesen, oder ein sulfatiertes Polymer, durch das die Filme zwar eine höhere Leitfähigkeit hatten, jedoch nach Trocknung brüchig wurden.

Von Ogasawara et al. [Ogasawara, M., Funahashi, K., Iwata, K., Mol. Cryst. Liq. Cryst. 118:159-162 (1985)] wird gezeigt, dass Polypyrrol-Filme mit dem Dotierungsmittel Tetraethylammoniumperchlorat gestreckt werden können. Die bei der Herstellung der Filme herrschende Temperatur hat einen direkten Einfluss sowohl auf die Verstreckbarkeit als auch auf die Leitfähigkeit Die bei -20°C hergestellten Filme zeigen bessere Eigenschaften als die bei höheren Temperaturen hergestellten. Die Verstreckbarkeit der Filme in Anwesenheit eines Lösungsmittels bei der Streckung ist gegenüber der Streckung in Luft verbessert.

Es besteht ein Bedarf an elektrisch leitenden polymeren Zusammensetzungen, die nach Methoden der Thermoplastverarbeitung, z.B. Pressoder Streckverfahren, verarbeitet werden können, und die gute mechanische Eigenschaften, z.B. hohe Zug- und Biegefestigkeiten aufweisen. Es wäre zudem günstig, wenn die elektrische Leitfähigkeit und die mechanischen Eigenschaften durch ein solches Verarbeitungsverfahren wesentlich erhöht werden könnten.

Ein Gegenstand der Erfindung ist eine Zusammensetzung, enthaltend
a) mindestens einen Polyheteroaromaten oder ein Anilin in oxidierter, polykationischer Form, und
b) mindestens ein Polyanion eines filmbildenden thermoplastischen Polymeren mit sulfatierten Alkoholgruppen 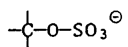 in wiederkehrenden Struktureinheiten, wobei das Polymer ausgewählt ist aus der gruppe bestehend aus Polyaddukte aus Glycidylverbindungen mit durch schnittlich mehr als einer Epoxidgruppe und einem Diol; hydroxylierte Polydiolefine; Polyacrylate oder Polymethacrylate mit Hydroxyalkylresten in der Estergruppe; sowie copolymerisate aus Acrylaten oder Methacrylaten oder Diolefinen mit Comonomeren ausgewählt aus der gruppe bestehend aus Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern.

Unter Polyheteroaromaten werden im Rahmen dieser Erfindung Homo- und Copolymere verstanden, die wiederkehrende heteroaromatische Struktureinheiten enthalten. Sie können höhermolekular oder auch oligomer sein, sofern sie bei Raumtemperatur fest sind und Filme zu bilden vermögen. Bevorzugt sind Polyheteroaromaten aus 5- oder 6-gliedrigen Ringen, die 1 bis 3, bevorzugt 1 Heteroatom aus der Grupe -O-, -S- und -N- enthalten, und deren C-Atome unsubstituiert oder mit C₁-c₁₆-Alkyl, besonders C₁-C₁₂-Alkyl substituiert sind. Vorzugsweise sind 2 C-Atome nicht substituiert, um die elektrochemische Polymerisation durchführen zu können. Der 5- oder 6-gliedrige Ring ist bevorzugt ausgewählt aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

Besonders bevorzugt ist der Polyheteroaromat aus einem Pyrrol der Formel 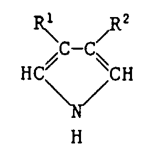 gebildet, worin R¹ und R² unabhängig voneinander H oder C₁-C₁₆-Alkyl bedeuten. R¹ und R² können z.B. für C₁-C₁₂-Alkyl, wie z.B. für Methyl oder Ethyl stehen, und stellen besonders H dar. Die NH-Gruppe des Pyrrols kann mit C₁-C₁₂-Alkyl, besonders C₁-C₆-Alkyl substituiert sein.

Als Aniline sind z.B. Anilin selbst und in 3-Stellung mit C₁-C₁₂-Alkyl, bevorzugt C₁-C₆-Alkyl substituiertes Anilin geeignet.

Die erfindungsgemässe Zusammensetzung enthält pro Struktureinheit des Polyheteroaromaten bevorzugt 0,1 bis 0,5, besonders 0,2 bis 0,4 Struktureinheiten mit sulfatierten Alkoholgruppen

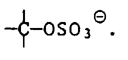

Das in der erfindungsgemässen Zusammensetzung verwendete thermoplastische Polymer mit versalzten sulfatierten Alkoholgruppen 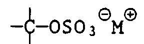 weist vorzugsweise eine Glasumwandlungstemperatur von -100 bis 350°C, besonders -50 bis 250°C auf, gemessen nach der DSC-Methode (Differential-Scannning-Calometry).

Die Zugfestigkeit dieses thermoplastischen Polymeren beträgt bevorzugt mindestens 5 MPa, besonders mindestens 20 MPa, gemessen nach DIN 53 455. Die Zugfestigkeit kann je nach Art der Polymeren bis zu 1000 MPa, bevorzugt bis zu 500 MPa und insbesondere bis zu 300 MPa betragen. Bei den versalzten sulfatierten Alkoholgruppen kann es sich z.B. um Alkalimetall- und Ammoniumsalze handeln, die nachfolgend für die Polymeren beschrieben werden.

Das Verhältnis von freien Alkoholgruppen zu sulfatierten Alkoholgruppen 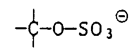 im thermoplastischen Polymer kann z.B. von 50:1 bis 1:50, bevorzugt 10:1 bis 1:10 betragen.

Die sulfatierten Alkoholgruppen können als sekundäre Gruppen 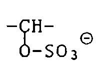 im Polymerrückgrat, oder in Seitengruppen des Polymeren als primäre Gruppen -CH₂-O-SO₃^{⊖} endständig, oder als sekundäre Gruppen 〉CH-O-SO₃^{⊖} oder als tertiäre Gruppen 〉̶C-O-SO₃^{⊕} mittelständig gebunden sein.

Den sulfatierten thermoplastischen Polymeren liegen bevorzugt Homo- und Copolymere von Hydroxyalkylacrylaten beziehungsweise -methacrylaten; Homo- und Copolymere von Butadien, Isopren und Chloropren, deren Doppelbindungen hydroxyliert sind; besonders.

Bei dem thermoplastischen Polymer kann es sich z.B. um ein mindestens teilweise sulfatiertes Polyaddukt aus a) einer Glycidylverbindung mit durchschnittlich mehr als einer Epoxidgruppe und b) einem Diol handeln, das 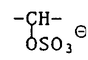 Gruppen in der Polymerkette enthält.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether; Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4′-hydroxy-3′,5′-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, Δ⁴-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N′-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N′-Dimethyl-N,N′-diglycidyl-bis-(p-aminophenyl)-methan; N′,N˝-Diglycidyl-N-phenyl-isocyanurat; N,N′-Diglycidylethylenharnstoff; N,N′-Diglycidyl-5,5-dimethyl-hydantoin, N,N′-Diglycidyl-5-isopropyl-hydantoin, N,N-Methylen-bis-(N′,N′-diglycidyl-5,5-dimethylhydantoin), 1,3-Bis-(N-glycidyl-5,5-dimethylhydantoin)-2-hydroxypropan; N,N′-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addition an der Glycidylgruppe eine sekundäre Alkoholgruppe gebildet wird, die sulfatiert werden kann.

Die Glycidylverbindungen können aber auch mit primären, aliphatischen, cycloaliphatischen oder aromatischen Monoaminen (z.B. Anilin, Toluidin, C₁-C₁₂-Alkylaminen, C₂-C₁₂-Hydroxyalkylaminen), aliphatischen, cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, Δ⁴-Tetrahydrophthalsäure, Hexahydrophthalsäure, 4-Methylhexahydrophthalsäure, 3,6-Endomethylen-Δ⁴-tetrahydrophthalsäure, 4-Methyl-3,6-endomethylen-Δ⁴-tetrahydrophthalsäure) oder aliphatischen, cycloaliphatischen, heterocyclischen oder aromatischen Bissekundäraminen oder Bissekundärcarbonsäureamiden (z.B. N,N'-Dimethylethylendiamin, N,N'-Dimethylpropylen-1,3-diamin, N,N'-Dimethylhexamethylendiamin, N,N'-Dicyclohexylhexamethylendiamin, N,N',N"-Trimethyldiethylentriamin, N,N'-Diethylpropylen-1,3-diamin, N-Methyl-3,5,5-trimethyl-3-(methylaminomethyl)-cyclohexylamin, N,N'-dimethylierte oder -diethylierte aromatische Diamine, z.B. m- oder p-Phenylendiamin, Bis-(4-aminophenylmethan oder -sulfon, 2,2-Bis-(4-aminophenyl)-propan, N,N-Dimethyl-m-xylylendiamin, sowie Ethylenharnstoff, 5,5-Dimethylhydantoin, 5-Isopropylhydantoin, N,N-Methylen-bis-5,5-dimethylhydantoin, 1,3-Bis-(5,5-dimethyl)-2-hydroxypropan, 5,5-Dimethyl-6-isopropyl-5,6-dihydrouracil), durch Polyaddition zu linearen Polyaddukten umgesetzt werden.

Bevorzugt ist eine erfindungsgemässe Zusammensetzung, worin das Polyaddukt
a) 100 bis 5 Mol-% gleiche oder verschiedene Struktureinheiten der Formel I 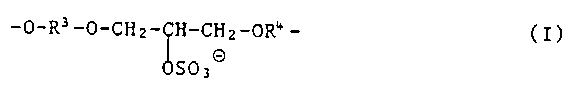 und
b) 95 bis 0 Mol-% gleiche oder verschiedene Struktureinheiten der Formel II 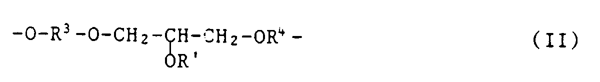 enthält, bezogen auf das Polyaddukt, wobei R³ und R⁴ unabhängig voneinander den um zwei Hydroxylgruppen verminderten Rest eines Diols mit aliphatischen oder aromatischen Diolgruppen darstellen, und R' H, C₁-C₂₀-Alkyl, C₁-C₂₀-Acyl oder mit einem C₁-C₂₀-Kohlenwasserstoffrest N-substituiertes Aminocarbonyl bedeutet.

Bevorzugt sind 90 bis 20, besonders 30 bis 80 Mol% Struktureinheiten der Formel I, und 80 bis 10, besonders 70 bis 20 Mol% Struktureinheiten der Formel II enthalten.

In einer bevorzugten Ausführungsform stellen R³ und R⁴ gleiche Reste dar. R³ und R⁴ in der Bedeutung als Rest mit aliphatischen Diolgruppen enthält bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes C₂-C₁₂-Alkylen, C₃-C₈-Cycloalkylen, C₁-C₄-Alkyl-C₅-C₈-cycloalkyl, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5 oder 1,6-Hexylen, Heptylen, Octylen, Nonylen, Decylen, Undecylen, Dodecylen, 1,3-Cyclopentylen, 1,3- oder 1,4-Cyclohexylen, 2-Methyl-1,4-cyclohexylen und Cyclohexyl-1,4-dimethylen.

Die aromatischen Diolgruppen der für die Polyaddukte verwendeten Diole sind insbesondere phenolische Gruppen. Die Diolreste mit phenolischen Gruppen enthalten bevorzugt 6-30, besonders 6-20 C-Atome. Eine bevorzugte Ausführungsform sind Zusammensetzungen, worin R³ und R⁴ unabhängig voneinander einen Rest der Formel III 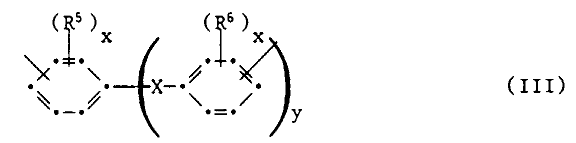 darstellen, worin X eine direkten Bindung, C₁-C₄-Alkylen, C₂-C₁₂-Alkyliden, C₅-C₈-Cycloalkyliden, -O-, -S-, -SO-, -SO₂-, -CO-, -CO₂-, -N(C₁-C₄-Alkyl)- oder -Si(CH₃)₂- bedeutet, R⁵ und R⁶ unabhängig voneinander H, Halogen, C₁-C₄-Alkyl oder C₁-C₄-Alkoxy sind, und x 1 oder 2 bedeutet und y für 0 oder 1 steht.

X stellt bevorzugt eine direkte Bindung, Methylen, Ethylen, C₂-C₆-Alkyliden, Cyclohexyliden der Cyclopentyliden, -O- oder -S- dar. R⁵ und R⁶ stehen vorzugsweise für H oder Methyl und y steht bevorzugt für 1.

Insbesondere bedeuten R³ und R⁴ den Rest 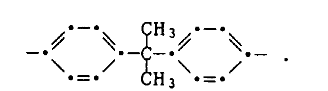 Bevorzugt ist auch eine erfindungsgemässe Zusammensetzung, worin das thermoplastische Polymer ein mindestens teilweise sulfatiertes Homo- oder Copolymer von Acrylaten oder Methacrylaten mit einer Gruppe 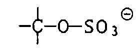 in der Estergruppe ist. Bevorzugter ist eine solche Zusammensetzung, worin das Polymer
a) 100 bis 5 Mol% gleiche oder verschiedene Struktureinheiten der Formel IV 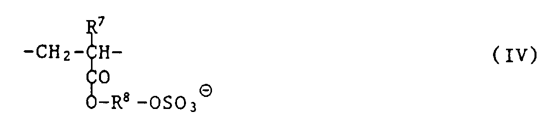 und
b) 95 bis 0 Mol% gleiche oder verschiedene Struktureinheiten der Formel V 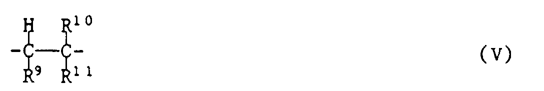 enthalten, bezogen auf das Polymer, worin R⁷ H oder Methyl bedeutet, R⁸ für lineares oder verzweigtes C₂-C₁₈-Alkylen, Poly(C₂-C₆-oxaalkylen) mit 2 bis 6 Oxaalkyleneinheiten, C₅-C₈-Cycloalkylen, Phenylen, Benzylen oder Xylylen oder die Gruppe 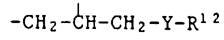 steht, Y -O-, 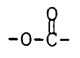 oder -N(C₁-C₄-Alkyl)- bedeutet, und R¹² C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt, R⁹ für H, C₁-C₆-Alkyl, -COOR¹² oder -COO^{⊖} steht, R¹⁰ H, F, Cl, CN oder C₁-C₆-Alkyl bedeutet, und R¹¹ H, F, Cl, CN, R¹²-O-, C₁-C₁₂-Alkyl, -COO^{⊖}, -COOR¹², -COOR⁸-OH, -OCO-R¹² oder Phenyl darstellt, wobei R⁸ und R¹² die zuvor angegebene Bedeutungen haben.

Bevorzugt sind 90 bis 20, besonders 80 bis 30 Mol% Struktureinheiten der Formel IV und 80 bis 10, besonders 70 bis 20 Mol% Struktureinheiten der Formel V enthalten.

R⁸ enthält als Alkylen bevorzugt 2 bis 12, besonders 2 bis 8, und insbesondere 2 bis 6 C-Atome. Beispiele sind Ethylen und die Isomeren von Propylen, Butylen, Pentylen, Hexylen, Heptylen, Octylen, Nonylen, Decylen, Undecylen, Dodecylen, Tetradecylen, Hexadecylen und Octadecylen. Bevorzugt sind Ethylen, 1,2- und 1,3-Propylen, 1,2-, 1,3- und 1,4-Butylen, 1,2-, 1,3-, 1,4- und 1,5-Pentylen und 1,2-, 1,3-, 1,4-, 1,5-und 1,6-Hexylen.

R⁸ in der Bedeutung von Poly(oxalkylen) enthält bevorzugt 2 bis 4 Oxaalkyleneinheiten, und bevorzugt 2 bis 4, besonders 2 oder 3 C-Atome im Alkylenrest.

R⁸ in der Bedeutung von Cycloalkylen stellt insbesondere Cyclopentylen oder Cyclohexylen dar.

Wenn R⁸ die Gruppe 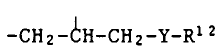 darstellt, so handelt es sich um Umsetzungsprodukte von Poly- oder Copoly(meth)acrylsäureglycidylestern mit einer H-aktiven Verbindung R¹²-Y-H. Y steht bevorzugt für -O- oder 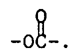 R¹² kann lineares oder verzweigtes C₁-C₁₈-, bevorzugt C₁-C₁₂- und besonders C₁-C₆-Alkyl sein. R¹² stellt als Cycloalkyl besonders Cyclopentyl oder Cyclohexyl dar. Bei R¹² als (C₁-C₁₂-Alkyl)-cycloalkyl ist das Cycloalkyl besonders Cyclopentyl oder Cyclohexyl und die Alkylgruppe kann linear oder verzweigt sein und enthält bevorzugt 1 bis 6, besonders 1 bis 4 C-Atome. Bedeutet R¹² Alkylphenyl oder Alkylbenzyl, so kann die Alkylgruppe linear oder verzweigt sein und enthält bevorzugt 1 bis 6, besonders 1 bis 4 C-Atome.

R⁹ steht bevorzugt für H. Bedeutet R⁹ Alkyl, so handelt es sich bevorzugt um Methyl oder Ethyl. Bedeutet R⁹ -COOR¹², so stellt R¹² bevorzugt C₁-C₁₂-, besonders C₁-C₆-Alkyl dar.

Bedeutet R¹⁰ Alkyl, so handelt es sich bevorzugt um C₁-C₄-Alkyl, z.B. Methyl, Ethyl, n-Propyl und n-Butyl. R¹⁰ steht bevorzugt für H, Cl oder C₁-C₄-Alkyl.

Bedeutet R¹¹ die Gruppe R¹²-O-, so stellt R¹² bevorzugt C₁-C₁₂-, besonders C₁-C₆-Alkyl dar. Bedeutet R¹¹ Alkyl, so enthält es bevorzugt 1 bis 6, besonders 1 bis 4 C-Atome. Bedeutet R¹¹ die Gruppe -COOR¹², so stellt R¹² bevorzugt C₁-₁₂-, besonders C₁-C₆-Alkyl, Cyclopentyl oder Cyclohexyl dar. Bedeutet R¹¹ die Gruppe -OCO-R¹², so stellt R¹² bevorzugt C₁-C₁₂-, besonders C₁-C₆-Alkyl, Phenyl oder Benzyl dar.

In der Gruppe -COOR⁸OH für R¹¹ gelten die zuvor für R⁸ angegebenen Bevorzugungen.

In einer bevorzugten Ausführungsform stehen R⁹ für H, R¹⁰ für H, F, Cl, Methyl oder Ethyl, und R¹¹ für F, Cl, CN, C₁-C₄-Alkyl, C₁-C₆-Alkoxy, -COO-C₁-C₆-Alkyl, -COO-R⁸-OH, -OOC-C₁-C₆-Alkyl oder Phenyl.

R' in der Bedeutung von C₁-C₂₀-Alkyl kann linear oder verzweigt sein. R' in der Bedeutung von Acyl kann z.B. C₁-C₂₀-Alkyl-CO-, C₅-C₈-Cycloalkyl-CO-, C₁-C₁₅-Alkyl-C₅-C₈-cycloalkyl-CO, C₅-C₈-Cycloalkyl-CH₂-CO-, C₁-C₁₄-Alkyl-C₅-C₈-cycloalkyl-CH₂-CO, Phenyl-CO, Benzyl-CO, C₁-C₁₄-Alkylphenyl-CO- oder -benzyl-CO- sein. Bei dem Kohlenwasserstoffrest im Aminocarbonyl kann es sich z.B. um C₁-C₂₀-Alkyl-, C₅-C₈-Cycloalkyl-, C₁-C₁₅-Alkyl-C₅-C₈-Cycloalkyl-, C₅-C₈-cycloalkyl-CH₂-, C₁-C₁₄-Alkyl-C₅-C₈-cycloalkyl-CH₂-, Phenyl-, Benzyl-, C₁-C₁₄-Alkylphenyl- oder -benzyl- handeln. R' steht bevorzugt für H.

Besonders bevorzugt sind Zusammensetzungen, worin in Formel IV R⁷ für H oder CH₃ und R⁸ für lineares oder verzweigtes C₂-C₆-Alkylen, Cyclopentylen oder Cyclohexylen stehen, und in Formel V R⁹ H bedeutet, R¹⁰ H oder Methyl darstellt, und R¹¹ -COOR¹² oder -COOR⁸OH bedeutet.

Die Polyanionen der Komponente b) in der erfindungsgemässen Zusammensetzung leiten sich von bekannten oder nach an sich bekannten Verfahren herstellbaren polymeren Salzen ab. Es handelt sich um filmbildende thermoplastische Polymere mit sulfatierten Alkhoholgruppen 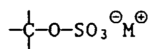 in wiederkehrenden Struktureinheiten, wobei M^{⊕} für ein Alkalimetall-oder Ammoniumkation steht.

Die sulfatierten Alkoholgruppen können als sekundäre Gruppen 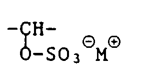 im Polymerrückgrat eingebaut sein, oder in Seitengruppen des Polymeren als primäre Gruppe -CH₂-SO₃^{⊖}M^{⊕} endständig oder als sekundäre Gruppe 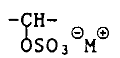 oder als tertiäre Gruppe 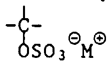 mittelständig eingebaut sein.

Die Glasumwandlungstemperatur der Polymeren kann -100 bis 350°C, bevorzugt -50 bis 250°C betragen, gemessen nach der DSC-Methode. Die Zugfestigkeit beträgt bevorzugt mindestens 5 MPa, besonders 10 MPa, gemessen nach DIN 53 455. Je nach Art des Polymeren kann die Zugfestigkeit bis zu 1000 MPa, bevorzugt bis zu 500 MPa und besonders bis zu 300 MPa betragen.

Der Polymerisationsgrad der Polymeren kann z.B. 5 bis 10000, bevorzugt 10 bis 5000 und insbesondere 10 bis 1000 betragen.

Bevorzugt sind Polymere, worin das Verhältnis von freien Alkoholgruppen zu sulfatierten Alkoholgruppen im Polymer 50:1 bis 1:50, besonders 10:1 bis 1:10 beträgt.

Das Ammoniumkation kann z.B. NH₄^{⊕}, ein protoniertes, primäres, sekundäres oder tertiäres Amin, oder quaternäres Ammonium oder Pyridinium sein. Das primäre Ammonium kann 1 bis 18 C-Atome, besonders 1 bis 12 und insbesondere 1 bis 6 C-Atome, das sekundäre Ammonium 2 bis 24, besonders 2 bis 12, insbesondere 2 bis 8 C-Atome, das tertiäre Ammonium 3 bis 30, besonders 3 bis 18 und insbesondere 3 bis 12 C-Atome, und das quaternäre Ammonium 4 bis 36, besonders 4 bis 24 und insbesondere 4 bis 18 C-Atome enthalten.

Bevorzugte Polymere sind solche, worin M^{⊕} Li^{⊕}, Na^{⊕} oder K^{⊕} darstellt, oder R¹³R¹⁴R¹⁵R¹⁶N^{⊕} ist, worin R¹³, R¹⁴, R¹⁵ und R¹⁶ unabgängig voneinander H, unsubstituiertes oder Hydroxyl-substituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R¹³ und R¹⁴ zusammen Tetramethylen, Pentamethylen oder 3-Oxapentylen sind und R¹⁵ und R¹⁶ die zuvor angegebenen Bedeutungen haben. Eine bevorzugte Ausführungsform sind Polymere, worin mindestens eines von R¹³ bis R¹⁶ nicht H bedeutet.

R¹³ bis R¹⁶ können in der Bedeutung von Alkyl linear oder verzweigt sein und bevorzugt 1 bis 12, besonders 1 bis 6 C-Atome enthalten. Beispiele sind Methyl, Ethyl, n- und -Propyl, n-, i- und t-Butyl, Pentyl, Hexyl, Heptyl, Octyl, Nonyl, Decyl, Undecyl, Dodecyl, Tetradecyl, Hexadecyl und Octadecyl.

R¹³ bis R¹⁶ in der Bedeutung von Hydroxyalkyl kann linear oder verzweigt sein und enthält bevorzugt 2 bis 18, besonders 2 bis 12 und insbesondere 2 bis 6 C-Atome. Einige Beispiele sind 2-Hydroxyeth-1-yl, 1- oder 2-Hydroxy-prop-3-yl, 1-Hydroxybut-4-yl, 1-Hydroxyhex-6-yl.

Beispiele für Alkylphenyl und Alkylbenzyl sind Methylphenyl, Dimethylphenyl, Ethylphenyl, n- oder i-Propylphenyl, n-, i- oder t-Butylphenyl, Hexylphenyl, Octylphenyl, Decylphenyl, Dodecylphenyl und entsprechend alkylierte Benzylreste.

R¹³ bis R¹⁶ in der Bedeutung von Cycloalkyl stellen besonders Cyclopentyl oder Cyclohexyl dar.

R¹³ bis R¹⁶ in der Bedeutung von Alkylcycloalkyl ist bevorzugt (C₁-C₁₂-Alkyl)cyclopentyl oder -cyclohexyl, z.B. Methyl- oder Ethylcyclopentyl oder -cyclohexyl.

Besonders bevorzugt stehen R¹³ bis R¹⁶ für C₁-C₆-Alkyl.

Den Polymeren können unterschiedliche Hydroxylgruppen enthaltende Polymere zu Grunde liegen, hydroxylierte Polydiolefine wie z.B. Polybutadien, Polyisopren oder Chloropren, Polyacrylate oder Polymethacrylate mit Hydroxyalkylresten in der Estergruppe; sowie Copolymerisate von Acrylaten oder Methacrylaten oder Dioloefinen mit Comonomeren wie z.B. Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern.

Solche Polymere sind bekannt oder können nach allgemein bekannten Verfahren hergestellt werden, wobei je nach Art des Polymeren und der Verfahrensbedingungen Hydroxylgruppen in den verwendeten Monomeren mit üblichen Schutzgruppen geschützt werden.

In einer bevorzugten Ausführungsform handelt es sich bei den Polymeren um ein mindestens teilweise sulfatiertes Polyaddukt aus a) einer Glycidylverbindung mit durchschnittlich mehr als einer Epoxidgruppe und b) einem Diol, das Gruppen 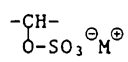 in der Polymerkette enthält. Bevorzugte Polyaddukte sind zuvor erwähnt worden. Solche Polymere sind in der US-A-3 402 221 beschrieben.

Bevorzugt sind solche Polyaddukte, worin das Polyaddukt
a) 100 bis 5 Mol-% gleiche oder verschiedene Struktureinheiten der Formel I 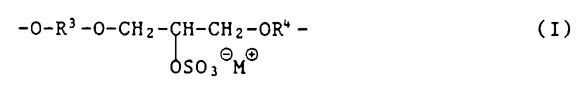 und
b) 95 bis 0 Mol-% gleiche oder verschiedene Struktureinheiten der Formel II 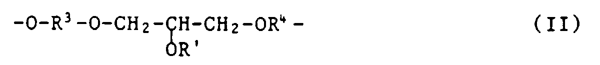 enthalten, bezogen auf den Polyglycidylether, wobei R³ und R⁴ unabhängig voneinander den um zwei Hydroxylgruppen verminderten Rest eines Diols mit aliphatischen oder aromatischen Diolgruppen darstellen, und R' H, C₁-C₂₀-Alkyl, C₁-C₂₀-Acyl oder mit einem C₁-C₂₀-Kohlenwasserstoff N-substituiertes Aminocarbonyl bedeutet.

Besonders bevorzugt sind Polyaddukte, worin R³ und R⁴ unabhängig voneinander einen Rest der Formel III 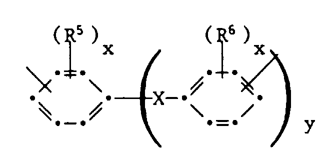 darstellen, worin X eine direkten Bindung, C₁-C₄-Alkylen, C₂-C₁₂-Alkylliden, C₅-C₈-Cycloalkyliden, -O-, -S-, -SO-, -SO₂-, -CO-, -CO₂-, -N(C₁-C₄-Alkyl)- oder -Si(CH₃)₂- bedeutet, R⁵ und R⁶ unabhängig voneinander H, Halogen, C₁-C₄-Alkyl oder C₁-C₄-Alkoxy sind, und x 1 oder 2 bedeutet und y für 0 oder 1 steht.

Insbesondere sind R³ und R⁴ der Rest

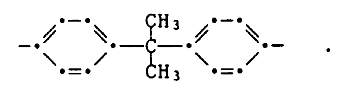

Für R³, R⁴, R⁵, R⁶, X, y und x sowie den Gehalt an Struktureinheiten gelten die zuvor angegebenen Bevorzugungen.

Eine andere bevorzugte Ausführungsform sind solche Polymere worin das thermoplastische Polymer ein mindestens teilweise sulfatiertes Homo- oder Copolymer von Acrylaten oder Methacrylaten mit einer Gruppe 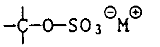 in der Estergruppe ist. Solche Polymere sind z.B. in den US-A-4 341 647 und US A 4 288 427 beschrieben.

Besonders bevorzugt sind Polymere, worin das Polymer
a) 100 bis 5 Mol% gleiche oder verschiedene Struktureinheiten der Formel IV 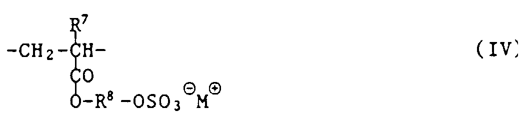 und
b) 95 bis 0 Mol% gleiche oder verschiedene Struktureinheiten der Formel V 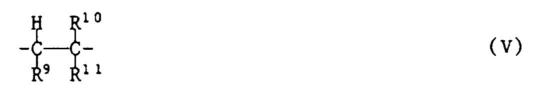 enthält, bezogen auf das Polymer, worin R⁷ H oder Methyl bedeutet, R⁸ für lineares oder verzweigtes C₂-C₁₈-Alkylen, Poly(C₂-C₆-oxaalkylen) mit 2 bis 6 Oxaalkyleneinheiten, C₅-C₈-Cycloalkylen, Phenylen, Benzylen oder Xylylen oder die Gruppe 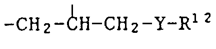 steht, Y -O-, 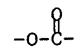 oder -N(C₁-C₄-Alkyl)- bedeutet, und R¹² C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt, R⁹ für H, C₁-C₆-Alkyl, -COOR¹² oder -COO^{⊖}M^{⊕} steht, R¹⁰ H, F, Cl, CN oder C₁-C₆-Alkyl bedeutet, und R¹¹ H, F, Cl, CN, R¹²-O-, C₁-C₁₂-Alkyl, -COO^{⊖}M^{⊕} , -COOR¹², -COOR⁸-OH, -OCO-R¹² oder Phenyl darstellt, wobei R⁸ und R¹² die zuvor angegebenen Bedeutungen haben.

Besonders bevorzugt sind solche Polymere, worin in Formel IV R⁷ für H oder CH₃ und R⁸ für lineares oder verzweigtes C₂-C₆-Alkylen, Cyclopentylen oder Cyclohexylen stehen, und in Formel V R⁹ H bedeutet, R¹⁰ H oder Methyl darstellt, und R¹¹ -COOR¹² oder -COOR⁸OH bedeutet.

Im übrigen gelten für R⁷ bis R¹², Y und den Gehalt an Struktureinheiten die zuvor angegebenen Bevorzugungen.

Die erfindungsgemäss zu verwendenden thermoplastischen Polymeren sind in bekannter Weise erhältlich, indem man in einem inerten Lösungsmittel ein thermoplastisches, filmbildendes Polymer, das in wiederkehrenden Struktureinheiten Alkoholgruppen 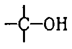 enthält, mit SO₃ umsetzt, danach die Reaktionsmischung mit einer Alkalimetall- oder Ammoniumbase neutralisiert und das Polymere isoliert.

Das Verfahren ist an sich bekannt. Das SO₃ kann z.B. als Gas in die Reaktionslösung eingeleitet werden. Bevorzugt wird ein Pyridin/SO₃-Komplex verwendet, der kommerziell erhältlich ist.

Geeignete inerte Lösungsmittel sind besonders polare aprotische Lösungsmittel, wobei sich die Wahl des Lösungsmittels hauptsächlich nach der Löslichkeit der Hydroxylgruppen enthaltenden Polymeren richtet. Die Lösungsmittel können alleine oder in Mischung aus mindestens 2 Lösungsmitteln verwendet werden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1,-Trichlorethan, 1,1,2,2-Tetrachlorethan, und Lactone wie γ-Butyrolacton, o-Valerolacton und Pivalolacton, Carbonsäureamide und Lactame wie N,N-Dimethylformamid, N,N-Diethylformamid, N,N-Dimethylacetamid, N,N-Diethylacetamid, N-Methyl-γ-butyrolactam, N-Methyl-ε-caprolactam, N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol.

Die Reaktionstemperatur beträgt z.B. 20 bis 150°C, vorzugsweise 40 bis 100°C. Die Reaktionszeit beträgt etwa 5 bis 10 Stunden. Nach Beendigung der Reaktion wird bei Verwendung von SO₃-Gas mit einer wässrigen Lösung von Alkalimetallbasen oder Ammoniumhydroxid, oder wässrigen oder organischen Lösungen von Aminhydroxiden neutralisiert. Bei Verwendung von Amin/SO₃-Komplexen, z.B. einem Pyridin/SO₃-Komplex, werden die entsprechenden Ammoniumsalze gebildet, die direkt verwendet oder in denen die Ammoniumgruppen mit stärkeren Basen ersetzt werden können. Die Salze der sulfatierten Polymeren werden im allgemeinen mit Wasser ausgefällt. Das Polymer wird dann abfiltriert und kann zur Reinigung mit Wasser oder einem organischen Nichtlösungsmittel gewaschen und darauf getrocknet werden.

Polyolefine können auch durch z.B. radikalische Polymerisation von Acrylaten und Methacrylaten mit -O-SO₃M^{⊕}-Resten in der Estergruppe gegebenenfalls zusammen mit Olefin-Comonomeren hergestellt werden.

Die erfindungsgemäss zu verwendenden Salze von sulfatierte Hydroxylgruppen enthaltenden Polymeren haben ebenfalls thermoplastische Eigenschaften. Ihre Glasumwandlungstemperatur ist im Vergleich zu den Ausgangspolymeren im wesentlichen unverändert und sie zeichnen sich durch ihre mechanische Festigkeit aus, z.B. durch eine hohe Zug- und Biegefestigkeit und hohe Flexibilität. Sie eignen sich hervorragend als Polyanionen für elektrisch leitende Polykationen von Polyheteroaromaten.

Solche erfindungsgemässen Zusammensetzungen werden in an sich bekannter Weise hergestellt, indem man in einer wässrigen, wässrig-organischen oder organischen Lösung einen Heteroaromaten oder ein Anilin in Gegenwart eines sulfatierten und versalzten Polymeren elektrochemisch polymerisiert und danach die Zusammensetzung von der Anode entfernt. Die Zusammensetzung wird im allgemeinen als Film abgeschieden, der je nach Elektrolysedauer und Stromdichte eine Dicke von z.B. 1 bis 500 µm oder 10-300 µm haben kann.

Die Elektrolyse kann potentiostatisch oder galvanostatisch durchgeführt werden. Als Anodenmaterial eignen sich z.B. Metalle (Titan, Nickel, Platin, Stahl) oder ITO-Glas. Die Stromdichte kann z.B. 0,5-20, besonders 1 bis 5 mA/cm² betragen.

Die Konzentration an sulfatierten und versalzten Polymeren kann 0,05 bis 1 Mol/l, bevorzugt 0,01 bis 0,5 Mol/l betragen, bezogen auf die Reaktionsmischung. Die Konzentration an Heteroaromaten oder einem Anilin kann 0,01 bis 10 Vol.%, besonders 0,1 bis 5 Vol.% betragen, bezogen auf das Volumen der Reaktionsmischung.

Geeignete organische Lösungsmittel sind elektrochemisch inert und z.B. protisch oder aprotisch und polar. Beispiele sind zuvor aufgeführt worden. Bevorzugt werden Kohlensäureester, besonders Propylencarbonat. Weitere geeignete Lösungsmittel sind z.B. Acetonitril, Methylenchlorid, Propionitril, Nitromethan und Alkanole und Wasser.

Eine bevorzugte Ausführungsform des Verfahrens ist dadurch gekennzeichnet, dass die Polymerisation in einem organischen Lösungsmittel durchgeführt wird, wobei M^{⊕} für ein Ammoniumkation mit mindestens einer organischen Gruppe steht. Besonders steht M^{⊕} hierbei für R¹³R¹⁴R¹⁵R¹⁶N^{⊕} worin R¹³ bis R¹⁶ unabhängig voneinander unsubstituiertes oder Hydroxylsubstituiertes C₁-C₁₈-Alkyl, Phenyl, (C₁-C₁₂-Alkyl)phenyl, (C₁-C₁₂-Alkyl)benzyl, C₅-C₇-Cycloalkyl, (C₁-C₁₂-Alkyl)-C₅-C₇-cycloalkyl darstellen, oder R¹³ und R¹⁴ zusammen Tetramethylen, Pentamethylen oder 3-Oxapentylen sind und R¹⁵ und R¹⁶ die zuvor angegebenen Bedeutungen haben. Insbesondere sind R¹³ bis R¹⁶ hierbei C₁-C₆-Alkyl, z.B. Methyl, Ethyl, n-Propyl und bevorzugt n-Butyl.

Die elektrochemische Polymerisation kann auch in Wasser oder wässrigorganischer Lösung durchgeführt werden. Die Mitverwendung von Puffern ist zweckmässig. Geeignete Puffer sind z.B. Alkylammoniumphosphate mit 1 bis 3, besonders 2 oder 3 Alkylresten in der Ammoniumgruppe, die 1 bis 6, besonders 1 bis 4 C-Atome enthalten können. Beispiele sind Trimethyl-, Triethyl-, Tri-n-propyl- und Tri-n-butylammoniumphosphat. Geeignete Puffer sind auch Kationenaustauscher in ihrer protonierten Form.

Der Reaktionsmischung können auch weitere Substanzen zugegeben werden, die sich auf der Anode mitabscheiden, z.B. anionische Weichmacher oder anionische Farbstoffe.

Nach beendeter Elektrolyse können die erfindungsgemässen Zusammensetzungen in Form von Filmen von der Anode gelöst bzw. abgezogen und durch Auswaschen mit Lösungsmitteln gereinigt werden. Die Filme können zu Fäden geschnitten werden.

Die erfindungsgemässen Zusammensetzungen weisen hohe elektrische Leitfähigkeiten auf, die im allgemeinen über 0,1 S/cm liegen. Sie weisen ferner wertvolle mechanische Eigenschaften auf, wie z.B. eine hohe Zähigkeit, Zugfestigkeit, Biegefestigkeit und Flexibilität. Ueberraschend wurde gefunden, dass die erfindungsgemässen Zusammensetzungen niedrige Glasumwandlungstemperaturen besitzen, so dass selbst bei einem geringen Polyanionanteil eine Verarbeitung nach thermoplastischen Formgebungsverfahren ohne Verlust der elektrischen Leitfähigkeit möglich ist.

Die erfindungsgemässe Zusammensetzung kann z.B. als elektrischer Leiter, Elektroden, Kathoden für Batterien, elektromagnetische Abschirmungsmaterialien, elektrisch leitende Fäden, Sensoren, antistatisches Verpackungsmaterial oder elektrisch leitendes Versiegelungsmaterial verwendet werden.

Es wurde ferner überraschend gefunden, dass die erfindungsgemässen Zusammensetzungen nach Verfahren für thermoplastische Polymere verarbeitet werden können, z.B. nach Pressverfahren und besonders Verstreckungsverfahren (Tiefziehen) unterhalb der Schmelz- bzw. Zersetzungstemperaturen, vorzugsweise im Bereich der Glasumwandlungstemperaturen. Neben einer Erhöhung der mechanischen Festigkeit wird hierbei überraschend eine wesentliche, z.B. bis zu 5-fache, Erhöhung der elektrischen Leitfähigkeit in Richtung der Verstreckung gefunden.

Ein weiterer Gegenstand der Erfindung ist ein Verfahren zur Erhöhung der elektrischen Leitfähigkeit in einem Film oder Fäden der erfindungsgemässen Zusammensetzung, das dadurch gekennzeichnet ist, dass man den Film oder die Fäden unterhalb der Schmelz- oder Zersetzungstemperatur verstreckt, vorzugsweise im Bereich der Glasumwandlungstemperatur.

Bevorzugt wird die Verstreckung bei einer Temperatur durchgeführt, die im Bereich von 20°C unter oder über der Glasumwandlungstemperatur liegt.

Verwendungsmöglichkeiten für das verstreckte Material sind zuvor für das unverstreckte Material erwähnt worden. Diese Verwendung ist ein weiterer Gegenstand der Erfindung.

Die nachfolgenden Beispiele erläutern die Erfindung näher. Die Glasumwandlungstemperatur (Tg) wird nach der Differential-Scanning-Calometry (DSC) bestimmt. Die Leitfähigkeit wird nach der Vierpunktmethode gemessen. Die Zugfestigkeit wird nach DIN 53 455 bestimmt.

### A) Herstellung sulfatierter Polymersalze

### Beispiel A1: Sulfatiertes Polyaddukt aus Bisphenol-A-diglycidylether und Bisphenol-A (Sulfatierung aller OH-Gruppen).

28,4 g Polyaddukt mit einem mittleren Molekulargewicht von 26800 (Polymerisationsgrad ca. 100) werden bei 50°C in 150 ml Dimethylformamid (DMF) gelöst. Hierzu gibt man 17,5 g Schwefeltrioxid-Pyridin-Komplex in 20 ml DMF. Nach 5 h Reaktionszeit wird auf 5°C abgekühlt und eine Lösung von 88 g (n-C₄H₉)₄N^{⊕}OH^{⊖}x30 H₂O in 100 ml DMF zugegeben. Die Reaktionsmischung wird in Wasser gegossen und das ausgefallene Polymersalz abfiltriert, mit Wasser gewaschen und getrocknet. Man erhält 50 g (83 % d.Th.) Polymersalz mit einer Tg von 87°C.

### Beispiel A2: Sulfatiertes lineares Polyaddukt aus Bisphenol-A-diglycidylether und Bisphenol-A (Sulfatierung jeder dritten OH-Gruppe).

28,4 g Polyaddukt gemäss Beispiel 1 in 100 ml DMF, 5,3 g Schwefeltrioxid-Pyridin-Komplex und 29,3 g (n-C₄H₉)₄N^{⊕}OH^{⊖} x30 H₂O in 50 ml DMF werden analog Beispiel 1 umgesetzt und aufgearbeitet. Man erhält 28,6 g (73 % d.Th.) Polymersalz mit einer Tg von 99°C.

### Beispiel A3: Sulfatiertes lineares Polyaddukt aus Bisphenol-A-diglycidylether und Bisphenol-A (Sulfatierung jeder fünften OH-Gruppe).

284 g Polyaddukt gemäss Beispiel 1 in 400 ml DMF, 33,4 g Schwefeltrioxid-Pyridin-Komplex und 160 g (n-C₄H₉)₄N^{⊕}OH^{⊖}x30 H₂O in 100 ml DMF werden analog Beispiel 1 umgesetzt und aufgearbeitet. Man erhält 309 g (89 % d.Th.) Polymersalz mit einer Tg von 101,5°C.

### Beispiel A4: Copolymeres (10:1) aus Methylmethacrylat und 3-Sulfatopropylmethacrylat-tetrabutylammoniumsalz.

43,3 g eines Copoylmeren (10:1) aus Methylmethacrylat und 3-Hydroxypropylmethacrylat werden bei 50°C in 300 ml DMF gelöst. Zu dieser Lösung werden 7,26 g Schwefeltrioxyd-Pyridinkomplex gegeben. Nach einer Reaktionszeit von 5 h wird auf 5°C abgekühlt und mit Tetrabutylammoniumhydroxid-30-hydrat in 50 ml DMF neutralisiert. Nach dem Fällen in Wasser, Filtrieren und Trocknen werden 45,3 g (80,3 %) Polymersalz mit einer Tg = 127,6°C erhalten. Der Schmelzpunkt beträgt 193°C.

### Beispiel A5: Copolymeres (1:1) aus Methylmethacrylat (MMA) und 3-Sulfatopropylmethacrylat-tetrabutylammoniumsalz.

45 g eines 1:1 Copolymeren aus MMA und 3-Hydroxypropylmethacrylat werden bei 50°C in 300 ml DMF gelöst. Zu dieser Lösung werden 33,96 g Schwefeltrioxid-Pyridinkomplex gegeben. Nach 5 h Reaktionszeit wird auf 5°C abgekühlt und mit Tetrabutylammoniumhydroxid-30-hydrat (170 g in 200 ml DMF) neutralisiert. Die Reaktionslösung wird in Wasser gefällt, danach filtriert und der Rückstand anschliessend getrocknet. Ausbeute: 87 g (81,3 % d.Th.); Tg = 84,6°C.

### Beispiel A6: Copolymer aus 2-Tetrabutylammoniumsulfatoethylmethacrylat/Methylmethacrylat (1:2).

20 g (44,3 mmol) 2-Tetrabutylammoniumsulfatoethylmethacrylat und 8,87 g (88,69 mmol) Methylmethacrylat werden in 100 ml Acetonitril gelöst und entgast. Nach Zugabe von 30 mg Azobisisobutyronitril wird die Reaktionslösung 36 h bei 60°C gerührt, am Vakuum zur Trockne eingeengt, in Wasser aufgenommen, filtriert und der Rückstand gefriergetrocknet. Man erhält 20,8 g (72 % d.Th.) Copolymer mit einer Tg von 85,4°C.

### Beispiel A7: Sulfatierte Polybutadiene

### Epoxidierung (jede 4-te Alkengruppe):

57,5 g (1 mol) cis-Polybutadien (Aldrich) werden in 1000 ml Chloroform gelöst. Zu der Lösung werden langsam 43 g (0,25 mol) 3-Chlorperbenzoesäure in 500 ml Chloroform zugetropft. Nach 12 h Rühren wird die Lösung in Methanol gefällt, das Polymer abfiltriert und mehrfach mit Methanol gespült.

### Hydrolyse der Epoxydgruppen:

Das noch feuchte Polymer wird in 1000 ml Tetrahydrofuran (THF) gelöst. Danach werden 54,3 ml 36 %-ige HCl langsam zugegeben. Nach 12 h wird die Lösung in Methanol gefällt, das abfiltrierte Polymer mehrfach mit Methanol gewaschen und im Vakuum bei 40°C getrocknet.

### Sulfatierung:

Das trockene Polymer wird in 500 ml DMF gelöst und 39,75 g (0,25 mol) Pyridin-Schwefeltrioxydkomplex werden zugegeben. Nach einer Reaktionszeit von 5 h wird bei Temperaturen um 10°C mit 46,25 g (0,25 mol) Tributylamin neutralisiert. Die Lösung wird in Wasser gefällt, das abfiltrierte Polymer mehrfach längere Zeit mit Wasser behandelt und anschliessend im Hochvakuum getrocknet.
Ausbeute: 110 g (85 % d.Th. bezogen auf Polybutadien).

| Elementaranalyse: | | | | | | |
|---|---|---|---|---|---|---|
| | %C | %H | %N | %O | %S | %Cl |
| ber.: | 64,5 | 7,54 | 2,69 | 12,28 | 6,15 | 6,8 |
| gef.: | 64,1 | 7,7 | 2,7 | 12,5 | 5,9 | 6,5 |

Tg = - 46,1°C; m/(n+m): 0,25.

Beispiele A8 und A9: In analoger Weise werden Polymere mit verschiedenen Epoxidierungsgraden respektive Sulfatierungsgraden hergestellt:
Copolymerzusammensetzung:
- n:: Anzahl Butadieneinheiten
- m:: Anzahl sulfatierter Butadieneinheiten

| Beispiel | m/(n+m) | Tg/°C |
|---|---|---|
| A8 | 0.16 | -48,3 |
| A9 | 0,11 | -56,7 |

Beispiel A10: Copolymeres aus MMA und 10-Hydroxydecylmethacrylat 12,6 g (0,126 mol) MMA und 7,38 g (0,03 mol) 10-Hydroxydecylmethacrylat werden in 40 ml THF gelöst. Anschliessend wird die Lösung auf 55°C erwärmt. Während einer Zeitspanne von 3 h werden 50 ml Azobioisobutyronitril gelöst in 10 ml THF zugetropft. Nach 20 h bei 55°C wird die Lösung in Methanol/Wasser gefällt.
Ausbeute: 17 g (85 % d.Th.)
Red. Visc.: 0,591 dl/g (in Chloroform).

### Sulfatierung:

15 g (0,0223 mol bezogen auf die Copolymerzusammensetzungen) des obigen Copolymeren werden in 100 ml DMF bei 50°C gelöst und 4,086 g (0,0257 mol) Schwefeltrioxyd-Pyridinkomplex werden zugegeben. Nach 2 h wird bei einer Temperatur unter 10°C mit 6,11 ml (0,0257 mol) Tributylamin neutralisiert. Die Lösung wird mit Wasser gefällt und das isolierte Polymer im Vakuum bei 50°C getrocknet.
Ausbeute: 18,5 g (98,3 % d.Th)
Tg: 148,2°C.

| Elementaranalyse: | | | | | | |
|---|---|---|---|---|---|---|
| | %C | %H | %N | %O | %S | %H₂O |
| ber.: | 60,36 | 9,44 | 1,71 | 24,5 | 3,92 | 1.1 |
| gef.: | 60,2 | 9,4 | 2,2 | 25,3 | 3,1 | 1.1 |

Beispiel A11: Copolymeres aus MMA und 4-Hydroxybutylmethacrylat. Das Polymer wird gemäss Beispiel A10 hergestellt.
Tg: 153,5°C

| Elementaranalyse: | | | | | | |
|---|---|---|---|---|---|---|
| | %C | %H | %N | %O | %S | %H₂O |
| ber.: | 56,7 | 8,9 | 1.89 | 28,1 | 4,3 | 2,4 |
| gef.: | 56,6 | 8,8 | 2,5 | 27,8 | 3,9 | 2,0 |

m/(n+m) = 0,25
m: Anzahl MMA-Einheiten
n: Anzahl sulfatierte Hydroxybutylmethacrylat-Einheiten.

### (Vergleich) Beispiel A12-A15: Sulfatierte Polyimide Synthese der Tetracarbonsäure-Komponente (TCK)

0,62 mol Benzophenon-3,4-dianhydrid werden in 500 ml Methanol zum Sieden erhitzt, bis eine klare Lösung entsteht. Nach dem Abkühlen auf Raumtemperatur wird die Ketogruppe mit Wasserstoff bei Normaldruck (Katalysator: 1 g 5 % Pd/C) reduziert. Der Katalysator wird abgetrennt und die Lösung zur Trockene eigeengt. Das entstandene Gemisch bestehend aus Di-[3-carboxy-4-(carbomethoxy)phenyl]methanol und zwei weiteren Isomeren wird in 82 %-iger Ausbeute (197,8 g) isoliert.

### Polymerisation

1 mol TCK (Isomerengemisch) und 1 mol Diamin (DA) werden unter Stickstoff in N-Methylpyrrolidon gegeben, sodass eine 20 %-ige Lösung entsteht. Die Lösung wird innerhalb einer Stunde auf 180°C erhitzt und unter Rühren 10 h auf dieser Temperatur gehalten. Nach Abkühlen wird das Polymer mit Wasser gefällt.

| Aminkomponente(DA) | |
|---|---|
| | Tg/°C |
| a) Bis-(4-Amino-3-Methyl-5-Ethylphenyl)methan | 302 |
| b) Diaminodurol | 340 (Tm) |
| c) Diaminononan | 105 |
| c) 1,3-Bis-(di-n-propylamin)-tetramethyldisiloxyan | 82,4 |

### Sulfatierung der Polyimide

0,1 mol der Polyimide werden in 100 ml DMF gelöst und mit 0,12 mol Schwefeltrioxid-Pyridinkomplex versetzt. Nach 5 h Rühren bei 50°C wird auf Raumtemperatur abgekühlt und mit 0,12 mol Tributylamin neutralisiert. Das Polymer wird in Wasser gefällt, isoliert, mit viel Wasser gewaschen und im Vakuum getrocknet.

| Beispiel | Polymeres mit DA | Tg/°C |
|---|---|---|
| A12 | a | 290 |
| A13 | b | 328(Tm) |
| A14 | c | 100 |
| A15 | d | 49,3 |
| Tm: Schmelztemperatur. | | |

### B) Herstellung von elektrisch leitenden Zusammensetzungen

Beispiel B1: 6 g Polymer gemäss Beispiel A1 und 5 ml Pyrrol werden in 200 ml Propylencarbonat gelöst. Die Lösung wird 10 min mit Stickstoff gespült und in die Elektrolysezelle transferiert. Bei einer Stromdichte von 2 mA/cm² wird innerhalb von 2 h ein ca. 200 µm dicker Film auf der Anode abgeschieden. Dieser wird mechanisch von der Elektrode entfernt, zuerst mit Ethanol, dann mit Acetonitril extrahiert und im Vakuum getrocknet.
Die Leitfähigkeit wird zu 8,7 S/cm bestimmt. Die Glasübergangstemperatur (Tg) beträgt 95°C. Nach Verstrecken des Films um 100 % bei 95°C steigt die Leitfähigkeit auf 47,5 S/cm an.

Beispiel B2: 12 g eines Copolymeren gemäss Beispiel A4 und 5 ml Pyrrol werden in 200 ml Propylencarbonat gelöst und in eine Elektrolysezelle transferiert. Analog Beispiel 1 wird ein 290 µm dicker Film erhalten, der eine Leitfähigkeit von 0,75 S/cm aufweist. Die Tg beträgt 230°C.

Beispiel B3: 6,4 g eines Copolymeren gemäss Beispiel A5 werden in 200 ml Propylencarbonat gelöst, 10 min mit Stickstoff gespült und in eine Elektrolysezelle transferiert. Analog Beispiel 1 wird innerhalb von 2 h ein 218 µm dicker Film erhalten. Die Leitfähigkeit des Films beträgt 8,07 S/cm. Nach Verstrecken des Films um ca. 30 % steigt die Leitfähigkeit auf 16,5 s/cm an. Die Glasübergangstemperatur wird zu 205°C bestimmt.

Beispiel B4: 23 g teilsulfatiertes Polymer gemäss Beispiel A2, 5,8 g einer Mischung von Phosphorsäure und Tributylamin (pH = 3,4), 12 ml Pyrrol und 4 ml Wasser werden in 300 ml Propylencarbonat gelöst, mit Stickstoff gesättigt und in eine Elektrolysezelle, ausgestattet mit einer rotierenden Ni-Anode (A =30 cm²) und einer Edelstahl-Kathode transferiert. Nach 1 h 7 min wird bei einer Stromdichte von 2 mA/cm² ein 150 µm dicker Film abgeschieden. Die Ausbeute beträgt nach Extraktion mit Acetonitril und Vakuumtrocknung 353 mg. Die Leitfähigkeit wird zu 15,9 S/cm bestimmt. Die Glasübergangstemperatur beträgt 110,5°C.
Durch Verstreckung bei 100°C ändert sich die Leitfähigkeit in Verstreckrichtung wie folgt:

| Verstreckung in % ℓₒ | Leitfähigkeit in S/cm |
|---|---|
| 0 | 15,9 |
| 20 | 25,3 |
| 40 | 29,4 |
| 85 | 33,1 |

Beispiel B5: 18 g Polymer gemäss Beispiel A1, 2 g 2,2'-Bithiophen, 2,1 g einer Mischung von Phosphorsäure und Tetrabutylammoniumhydroxyd (pH = 3,4) werden in 300 ml Propylencarbonat gelöst und unter Stickstoff in ein Elektrolysegefäss transferiert. Nach einer Elektrolysezeit von 1 h scheidet sich ein 115 µm dicker Film auf der Ni-Anode ab. Die Leitfähigkeit wird zu 5,5·10⁻³ S/cm bestimmt. Die Tg beträgt 107°C.

Beispiel B6: 11,8 g teilsulfatiertes Polybutadien gemäss Beispiel A7 werden in 200 ml Propylencarbonat gelöst mit 10 ml Pyrrol versetzt und in die bereits beschriebene Elektrolysezelle eingefüllt. Bei einer Stromdichte von 2 mA/cm² scheidet sich binnen 2 h ein 0,0088 cm dicker Film ab, der eine Leitfähigkeit von 12,5 S/cm aufweist. Nach Verstrecken bei Raumtemperatur um den Faktor 2,11 steigt die Leitfähigkeit in Verstreckrichtung auf 126 S/cm. Die Bruchdehnung dieses Films liegt bei 211 %, der E-Modul bei 387 MPa. Analoge Versuche mit Polybutadienen gemäss Beispielen A8 und A9 ergeben Leitfähigkeiten (unverstreckt) im Bereich von 8-14 S/cm.

Beispiel B7: Eine Lösung von 5,77 g des Copolymeren gemäss Beispiel A11 und 10 ml Pyrrol in 200 ml Propylencarbonat wird analog Beispiel B6 elektrochemisch umgesetzt. Nach einer Elektrolysedauer von 1 h wird ein 0,012 cm dicker Film erhalten. Die Leitfähigkeit beträgt 3,7 S/cm. Der Film ist bei Temperaturen um 150°C verformbar.

Beispiel B8: Eine Lösung von 6,44 g des Copolymeren gemäss Beispiel A10 und 10 ml Pyrrol wird analog Beispiel B6 elektrochemisch umgesetzt. Nach einer Elektrolysedauer von 1 h wird ein 0,013 cm dicker Film erhalten. Die Leitfähigkeit beträgt 4,6 S/cm. Der Film ist bei Temperaturen um 150°C verformbar.

(Vergleich) Beispiel B9: 16,7 g des sulfatierten Polyimids gemäss Beispiel A12 werden in 200 ml Propylencarbonat gelöst und mit 10 ml Pyrrol versetzt. Analog Beispiel B6 wird nach einer Elektrolysedauer von 53 min (200 As) ein 0,006 cm dicker Film erhalten. Die Leitfähigkeit beträgt 3,9 S/cm.

(Vergleich) Beispiel B10: 7,16 g des sulfatierten Polyimids gemäss Beispiel A13 werden in 200 ml Propylencarbonat gelöst (0,05 molar) und mit 10 ml Pyrrol versetzt. Analog Beispiel B6 wird mit einer Ladungsmenge von 200 As ein 0,01 cm dicker Film mit einer Leitfähigkeit von 0,32 S/cm erhalten.

(Vergleich) Beispiel B11: 7,66 g des sulfatierten Polyimids gemäss Beispiel A14 werden in 200 ml Propylencarbonat gelöst (0,05 molar) und mit 10 ml Pyrrol versetzt. Analog Beispiel B6 wird mit einer Ladungsmenge von 200 As ein 0,009 cm dicker Film mit einer Leitfähigkeit von 0,7 S/cm erhalten.

(Vergleich) Beispiel B12: 8 g des sulfatierten Polyimids gemäss Beispiel A15 werden in 200 ml Propylencarbonat gelöst (0,05 molar) und mit 10 ml Pyrrol versetzt. Analog Beispiel B6 wird mit einer Landungsmenge von 200 As ein 0,0095 cm dicker Film mit einer Leitfähigkeit von 8 S/cm erhalten.

## Patentansprüche

1. Zusammensetzung, enthaltend
a) mindestens einen Polyheteroaromaten oder ein Anilin in oxidierter, polykationischer Form, und
b) mindestens ein Polyanion eines filmbildenden thermoplastischen Polymeren mit sulfatierten Alkholgruppen 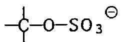 in wiederkehrenden Struktureinheiten, wobei das Polymer ausgewählt ist aus der Gruppe bestehend aus Polyaddukte aus Glycidylverbindungen mit durchschnittlich mehr als einer Epoxidgruppe und einem Diol; hydroxylierte Polydiolefine; Polyacrylate oder Polymethacrylate mit Hydroxyalkylresten in der Estergruppe; und Copolymerisate aus Acrylaten oder Methacrylaten mit Hydroxyalkylresten in der Estergruppe oder hydroxylierten Diolefinen mit Comonomeren ausgewählt aus der Gruppe bestehend aus Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern.

2. Zusammensetzung gemäss Anspruch 1, worin der Polyheteroaromat aus 5-oder 6-gliedrigen Ringen gebildet ist, die 1 bis 3 Heteroatome aus der Gruppe O, S und N enthalten, und deren C-Atome unsubstituiert oder mit C₁-C₁₆-Alkyl substituiert sind.

3. Zusammensetzung gemäss Anspruch 2, worin der 5- oder 6-gliedrige Ring ausgewählt ist aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

4. Zusammensetzung gemäss Anspruch 2, worin der Polyheteroaromat aus einem Pyrrol der Formel 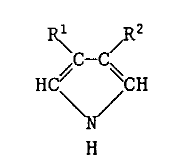 gebildet ist, worin R¹ und R² unabhängig voneinander H oder C₁-C₁₆-Alkyl bedeuten.

5. Zusammensetzung gemäss Anspruch 1, worin pro Struktureinheit des Polyheteroaromaten 0,1-0,5 Struktureinheiten mit sulfatierten Alkoholgruppen 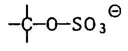 enthalten sind.

6. Zusammensetzung gemäss Anspruch 5, worin 0,2 bis 0,4 Struktureinheiten mit sulfatierten Alkoholgruppen enthalten sind.

7. Zusammensetzung gemäss Anspruch 1, worin das thermoplastische Polymer in Form von versalzten sulfatierten Alkoholgruppen 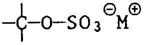 eine Tg von -100 bis 350°C aufweist, und M^{⊕} ein Alkalimetall-oder Ammoniumkation bedeutet.

8. Zusammensetzung gemäss Anspruch 7, worin die Tg -50 bis 250°C beträgt.

9. Zusammensetzung gemäss Anspruch 1, worin das Verhältnis von freien Alkoholgruppen zu sulfatierten Alkoholgruppen 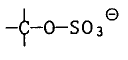 im thermoplastischen Polymer 50:1 bis 1:50 beträgt.

10. Zusammensetzung gemäss Anspruch 9, worin das Verhältnis 10:1 bis 1:10 beträgt.

11. Zusamensetzung gemäss Anspruch 1, worin das Polyaddukt
a) 100 bis 5 Mol-% gleiche oder verschiedene Struktureinheiten der Formel I 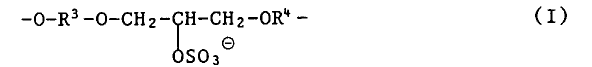 und
b) 95 bis 0 Mol-% gleiche oder verschiedene Struktureinheiten der Formel II 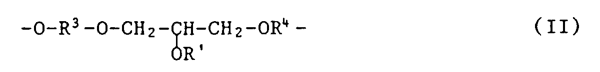 enthält, bezogen auf das Polyaddukt, wobei R³ und R⁴ unabhängig voneinander den um zwei Hydroxylgruppen verminderten Rest eines Diols mit aliphatischen oder aromatischen Diolgruppen darstellen, und R' H, C₁-C₂₀-Alkyl, C₁-C₂₀-Acyl oder mit einem C₁-C₂₀-Kohlenwasserstoffrest substituiertes Aminocarbonyl bedeutet.

12. Zusammensetzung gemäss Anspruch 11, worin R³ und R⁴ unabhängig voneinander einen Rest der Formel III 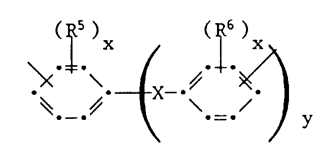 darstellen, worin X eine direkten Bindung, C₁-C₄-Alkylen, C₂-C₁₂-Alkyliden, C₅-C₈-Cycloalkyliden, -O-, -S-, -SO-, -SO₂-, -CO-, -CO₂-, -N(C₁-C₄-Alkyl)- oder -Si(CH₃)₂- bedeutet, R⁵ und R⁶ unabhängig voneinander H, Halogen, C₁-C₄-Alkyl oder C₁-C₄-Alkoxy sind, und x 1 oder 2 bedeutet und y für 0 oder 1 steht.

13. Zusammensetzung gemäss Anspruch 11, worin R³ und R⁴ den Rest 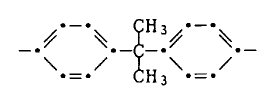 bedeuten.

14. Zusammensetzung gemäss Anspruch 1, worin das thermoplastische Polymer ausgewählt ist aus der Gruppe bestehend aus Homo- und Copolymere von Hydroxyalkylacrylaten beziehungsweise -methacrylaten; Homo- und Copolymere von Butadien, Isopren und Chloropren, deren Doppelbindungen hydroxyliert sind.

15. Zusammensetzung gemäss Anspruch 1, worin das thermoplastische Polymer ein mindestens teilweise sulfatiertes Homo- oder Copolymer von Acrylaten oder Methacrylaten mit einer Gruppe 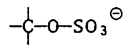 in der Estergruppe ist.

16. Zusammensetzung gemäss Anspruch 15, worin das Polymer
a) 100 bis 5 Mol% gleiche oder verschiedene Struktureinheiten der Formel IV 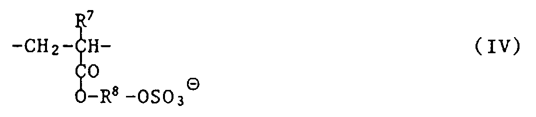 und
b) 95 bis 0 Mol% gleiche oder verschiedene Struktureinheiten der Formel V 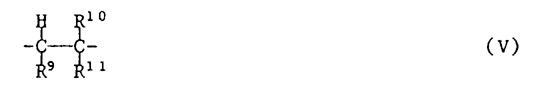 enthält, bezogen auf das Polymer, worin R⁷ H oder Methyl bedeutet, R⁸ für lineares oder verzweigtes C₂-C₁₈-Alkylen, Poly(C₂-C₆-oxaalkylen) mit 2 bis 6 Oxaalkyleneinheiten, C₅-C₈-Cycloalkylen, Phenylen, Benzylen oder Xylylen oder die Gruppe 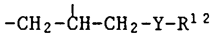 steht, Y -O-, 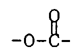 oder -N(C₁-C₄-Alkyl)- bedeutet, und R¹² C₁-C₁₈-Alkyl, C₅-C₇-Cycloalkyl, (C₁-C₁₂-Alkyl)-C₅-C₇-cycloalkyl, Phenyl, (C₁-C₁₂-Alkyl)phenyl, Benzyl oder (C₁-C₁₂-Alkyl)benzyl darstellt, R⁹ für H, C₁-C₆-Alkyl, -COOR¹² oder -COO^{⊖} steht, R¹⁰ H, F, Cl, CN oder C₁-C₆-Alkyl bedeutet, und R¹¹ H, F, Cl, CN, R¹²-O-, C₁-C₁₂-Alkyl, -COO^{⊖}, -COOR¹², -COOR⁸-OH, -OCO-R¹² oder Phenyl darstellt, wobei R⁸ und R¹² die zuvor angegebene Bedeutungen haben.

17. Zusammensetzung gemäss Anspruch 16, worin in Formel IV R⁷ für H oder CH₃ und R⁸ für lineares oder verzweigtes C₂-C₆-Alkylen, Cyclopentylen oder Cyclohexylen stehen, und in Formel V R⁹ H bedeutet, R¹⁰ H oder Methyl darstellt, und R¹¹ -COOR¹² oder -COOR⁸OH bedeutet.

18. Verfahren zur Herstellung einer Zusammensetzung gemäss Anspruch 1, dadurch gekennzeichnet, dass man in einer wässrigen, wässrig-organischen oder organischen Lösung einen Heteroaroamten in Gegenwart eines filmbildenden thermoplastischen Polymeren mit sulfatierten Alkoholgruppen 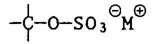 in wiederkehrenden Struktureinheiten, wobei M^{⊕} für ein Alkalimetall- oder Ammoniumkation steht, elektrochemisch polymerisiert und danach die Zusammensetzung von der Anode entfernt.

19. Verfahren zur Erhöhung der elektrischen Leitfähigkeit in einem Film oder Fäden der Zusammensetzung gemäss Anspruch 1, dadurch gekennzeichnet, dass man den Film oder die Fäden unterhalb der Schmelz- oder Zersetzungstemperatur verstreckt.

20. Verfahren gemäss Anspruch 19, dadurch gekennzeichnet, dass man die Verstreckung bei einer Temperatur durchführt, die im Bereich von 20°C unter oder über der Glasumwandlungstemperatur liegt.

21. Verwendung einer Zusammensetzung gemäss Anspruch 1 als elektrische Leiter, Elektroden, Kathoden für Batterien, elektromagnetische Abschirmungsmaterialien, elektrisch leitende Fäden, Sensoren, antistatisches Verpackungsmaterial oder elektrisch leitendes Versiegelungsmaterial.

22. Verwendung von nach dem Verfahren gemäss Anspruch 19 hergestellten Filmen oder Fasern als elektrische Leiter, Elektroden, Kathoden für Batterien, elektromagnetische Abschirmungsmaterialien, elektrisch leitende Fäden, Sensoren, antistatisches Verpackungsmaterial oder elektrisch leitendes Versiegelungsmaterial.

## Claims

1. A composition comprising
(a) at least one polyheteroaromatic compound or an aniline in oxidised, polycationic form, and
(b) at least one polyanion of a film-forming thermoplastic polymer containing sulfated alcohol groups 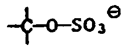 in repeating structural units, the polymer being selected from the group consisting of polyadducts of glycidyl compounds having on average more than one epoxide group and a diol; hydroxylated polydiolefins; polyacrylates or polymethacrylates having hydroxyalkyl radicals in the ester group; and copolymers of acrylates or methacrylates having hydroxyalkyl radicals in the ester group or hydroxylated diolefins with comonomers selected from the group consisting of acrylonitrile, olefins, diolefins, vinyl chloride, vinylidene chloride, vinyl fluoride, vinylidene fluoride, styrene, α-methylstyrene, maleic anhydride, maleimide, vinyl ethers and vinyl esters.

2. A composition according to claim 1, wherein the polyheteroaromatic compound is formed from 5- or 6-membered rings which contain 1 to 3 heteroatoms from the group consisting of O, S and N, and the carbon atoms of which are unsubstituted or substituted by C₁-C₁₆alkyl.

3. A composition according to claim 2, wherein the 5- or 6-membered ring is selected from the group consisting of pyrrole, thiophene, furan, 2,2'-bipyrrole, 2,2'-bithiophene, 2,2'-bifuran, thiazole, oxazole, thiadiazole and imidazole.

4. A composition according to claim 2, wherein the polyheteroaromatic compound is formed from a pyrrole of formula 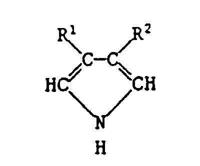 wherein R¹ and R² are each independently of the other hydrogen or C₁-C₁₆alkyl.

5. A composition according to claim 1, which contains 0.1 to 0.5 structural units containing sulfated alcohol groups 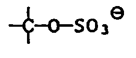 per structural unit of the polyheteroaromatic compound.

6. A composition according to claim 5, which contains 0.2 to 0.4 structural units containing sulfated alcohol groups.

7. A composition according to claim 1, wherein the thermoplastic polymer in the form of sulfated alcohol groups 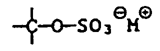 in salt form has a Tg of -100 to 350°C, and M^{⊕} is an alkali metal cation or an ammonium cation.

8. A composition according to claim 7, wherein the Tg is -50 to 250°C.

9. A composition according to claim 1, wherein the ratio of free alcohol groups to sulfated alcohol groups 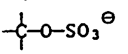 in the thermoplastic polymer is 50:1 to 1:50.

10. A composition according to claim 9, wherein the ratio is 10:1 to 1:10.

11. A composition according to claim 1, wherein the polyadduct contains
a) 100 to 5 mol% of identical or different structural units of formula I 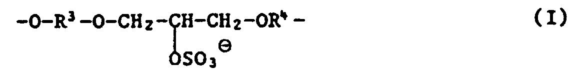 and
b) 95 to 0 mol% of identical or different structural units of formula II 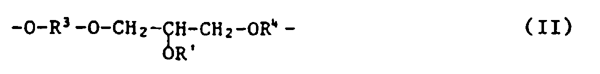 based on said polyadduct, in which R³ and R⁴ are each independently of the other the radical of a diol containing aliphatic or aromatic diol groups, which radical is diminished by two hydroxyl groups, and R' is hydrogen, C₁-C₂₀alkyl, C₁-C₂₀acyl or aminocarbonyl which is substituted by a C₁-C₂₀hydrocarbon residue.

12. A composition according to claim 11, wherein R³ and R⁴ are each independently of the other a radical of formula III 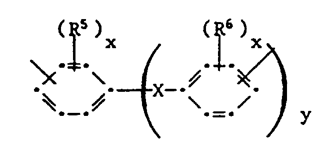 wherein X is a direct bond, C₁-C₄alkylene, C₂-C₁₂alkylidene, C₅-C₈cycloalkylidene, -O-, -S-, -SO-, SO₂-, -CO-, -CO₂-, -N(C₁-C₄alkyl) or -Si(CH₃)₂-, R⁵ and R⁶ are each independently of the other hydrogen, halogen, C₁-C₄alkyl or C₁-C₄alkoxy, and x is 1 or 2 and y is 0 or 1.

13. A composition according to claim 11 wherein R³ and R⁴ are the radical

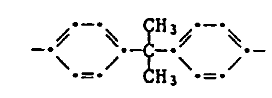

14. A composition according to claim 1, wherein the thermoplastic polymer is selected from the group consisting of homopolymers and copolymers of hydroxyalkyl acrylates and/or hydroxyalkyl methacrylates; homopolymers and copolymers of butadiene, isoprene and chloroprene, whose double bonds are hydroxylated.

15. A composition according to claim 1, wherein the thermoplastic polymer is an at least partially sulfated homopolymer or copolymer of acrylates or methacrylates containing a 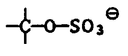 group in the ester group.

16. A composition according to claim 15, wherein the polymer contains
a) 100 to 5 mol% of identical or different structural units of formula IV 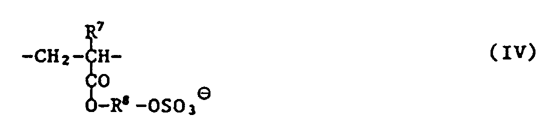 and
b) 95 to 0 mol% of identical or different structural units of formula V 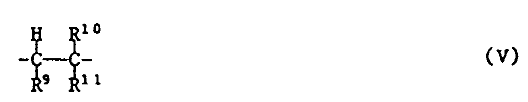 based on said polymer, in which R⁷ is hydrogen or methyl, R⁸ is linear or branched C₂-c₁₈alkylene, poly(C₂-C₆oxaalkylene) containing 2 to 6 oxaalkylene units, C₅-C₈cycloalkylene, phenylene, benzylene or xylylene or is the group 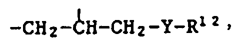 Y is -O-, 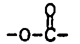 or -N(C₁-C₄alkyl)-, and R¹² is C₁-C₁₈alkyl, C₅-C₇-cycloalkyl, (C₁-C₁₂alkyl)-C₅-C₇cycloalkyl, phenyl, (C₁-C₁₂alkyl)phenyl, benzyl or (C₁-C₁₂alkyl)benzyl, R⁹ is hydrogen, C₁-C₆alkyl, -COOR¹² or -COO^{⊖}, R¹⁰ is hydrogen, fluoro, chloro, cyano or C₁-C₆alkyl, and R¹¹ is hydrogen, fluoro, chloro, cyano, R¹²-O-, C₁-C₁₂alkyl, -COO^{⊖}, -COOR¹², -COOR⁸-OH, -OCO-R¹² or phenyl, where R⁸ and R¹² have the meanings given previously.

17. A composition according to claim 16, wherein in formula IV R⁷ is hydrogen or CH₃ and R⁸ is linear or branched C₂-C₆alkylene, cyclopentylene or cyclohexylene, and in formula V R⁹ is hydrogen, R¹⁰ is hydrogen or methyl and R¹¹ is -COOR¹² or -COOR⁸OH.

18. A process for the preparation of a composition according to claim 1, which comprises electrochemically polymerizing a heteroaromatic compound in an aqueous, aqueous-organic or organic solution and in the presence of a film-forming thermoplastic polymer which contains sulfated alcohol groups 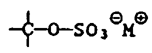 in repeating structural units, where M^{⊕} is an alkali metal cation or an ammonium cation, and subsequently removing the composition from the anode.

19. A process for increasing the electrical conductivity in a film or filaments of a composition according to claim 1, which comprises drawing said film or filaments at below the melting or decomposition temperature.

20. A process according to claim 19, wherein drawing is effected at a temperature which is in the range of 20°C below or above the glass transition temperature.

21. Use of a composition according to claim 1 as electrical conductors, electrodes, cathodes for batteries, electromagnetic screening material, electrically conducting filaments, sensors, antistatic packaging material or electrically conducting sealing material.

22. Use of a film or filaments prepared by the process of claim 19 as electrical conductors, electrodes, cathodes for batteries, electromagnetic screening material, electrically conducting filaments, sensors, antistatic packaging material or electrically conducting sealing material.

## Revendications

1. Composition contenant :
a) au moins un composé polyhétéroaromatique ou une aniline sous forme oxydée polycationique, et
b) au moins un polyanion d'un polymère thermoplastique filmogène comportant des groupes alcool sulfaté : 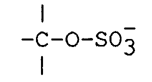 dans des motifs structuraux répétitifs, où le polymère est choisi dans l'ensemble comprenant les produits de polyaddition de composés glycidylés ayant en moyenne plus d'un groupe époxy, et d'un diol ; des polydioléfines hydroxylées ; des polyacrylates ou polyméthacrylates comportant des radicaux hydroxyalkyle dans le groupe ester ; et des copolymères d'acrylates et de méthacrylates comportant des radicaux hydroxyalkyle dans le groupe ester ou de dioléfines hydroxylées avec des comonomères choisis parmi l'ensemble comprenant l'acrylonitrile, les oléfines, les dioléfines, le chlorure de vinyle, le chlorure de vinylidène, le fluorure de vinyle, le fluorure de vinylidène, le styrène, l'α-méthylstyrène, l'anhydride maléique, le maléimide, les vinyléthers et les esters vinyliques.

2. Composition selon la revendication 1, dans laquelle le composé polyhétéroaromatique est formé de noyaux à 5 ou 6 chaînons contenant de 1 à 3 hétéroatomes choisis dans le groupe comprenant O, S et N, et dont les atomes de carbone sont non substitués ou substitués par des substituants alkyle en C₁-C₁₆.

3. Composition selon la revendication 2, dans laquelle le noyau à 5 ou 6 chaînons est choisi dans le groupe comprenant le pyrrole, le thiophène, le furanne, le 2,2'-bipyrrole, le 2,2'-bithiophène, le 2,2'-bifuranne, le thiazole, l'oxazole, le thiadiazole et l'imidazole.

4. Composition selon la revendication 2, dans laquelle le composé polyhétéroaromatique est constitué d'un pyrrole de formule : 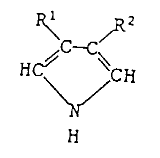 dans laquelle R¹ et R², indépendamment l'un de l'autre, sont des hydrogènes ou des groupes alkyle en C₁-C₁₆.

5. Composition selon la revendication 1, qui contient par motif structural du composé polyhétéroaromatique 0,1 à 0,5 motifs structuraux comportant des groupes alcool sulfaté :

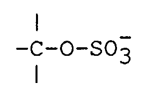

6. Composition selon la revendication 5, qui contient de 0,2 à 0,4 motifs structuraux comportant des groupes alcool sulfaté.

7. Composition selon la revendication 1, dans laquelle le polymère thermoplastique sous forme de groupes alcool sulfaté salifiés : 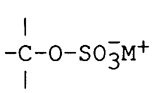 a une Tg de -100 à 350°C, et M⁺ est un cation d'un métal alcalin ou ammonium.

8. Composition selon la revendication 7, dans laquelle la Tg est de -50 à 250°C.

9. Composition selon la revendication 1, dans laquelle le rapport des groupes alcool libre aux groupes alcool sulfaté 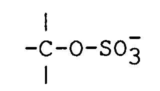 dans le polymère thermoplastique est de 50:1 à 1:50.

10. Composition selon la revendication 9, dans laquelle le rapport est de 10:1 à 1:10.

11. Composition selon la revendication 1, dans laquelle le produit de polyaddition contient :
a) de 100 à 5 % en moles de motifs structuraux identiques ou différents de formule I : 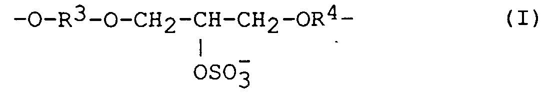 et
b) de 95 à 0 % en moles de motifs structuraux identiques ou différents de formule II : 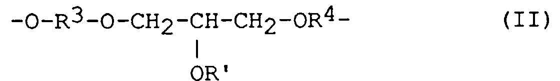 par rapport au produit d'addition, où R³ et R⁴, indépendamment l'un de l'autre, représentent le résidu diminué de deux groupes hydroxyle d'un diol comportant des groupes diol aliphatique ou aromatique, et R' est H ou un groupe alkyle en C₁-C₂₀, acyle en C₁-C₂₀ ou amino-carbonyle N-substitué par un résidus hydrocarboné en C₁-C₂₀.

12. Composition selon la revendication 11, dans lesquelles R³ et R⁴, indépendamment l'un de l'autre, sont des radicaux de formule III : 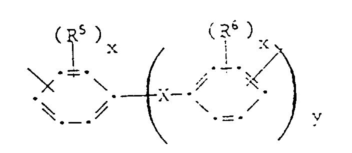 dans laquelle X est une liaison directe, un groupe alkylène en C₁-C₄, alkylidène en C₂-C₁₂, cycloalkylidène en C₅-C₈, -O-, -S-, -SO₂-, -CO-, -CO₂-, -N(alkyle en C₁-C₄)- ou -Si(CH₃)₂-, R⁵ et R⁶, indépendamment l'un de l'autre, sont des hydrogènes ou des groupes halogéno, alkyle en C₁-C₄ ou alcoxy en C₁-C₄, et x vaut 1 ou 2 et y vaut 0 ou 1.

13. Composition selon la revendication 11, dans laquelle R³ et R⁴ sont chacun le radical suivant :

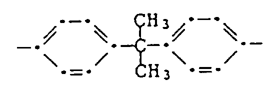

14. Composition selon la revendication 1, dans laquelle le polymère thermoplastique est choisi dans l'ensemble comprenant les homo- et copolymères d'acrylates d'hydroxyalkyles ou de méthacrylates d'hydroxyalkyles ; les homo- et copolymères du butadiène, de l'isoprène et du chloroprène, dont les doubles liaisons sont hydroxylées.

15. Composition selon la revendication 1, dans laquelle le polymère thermoplastique est un homo- ou un copolymère, au moins partiellement sulfaté, d'acrylates ou de méthacrylates comportant un groupe : 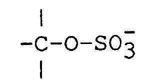 dans le groupe ester.

16. Composition selon la revendication 15, dans laquelle le polymère contient :
a) de 100 à 5 % en moles de motifs structuraux identiques ou différents de formule IV : 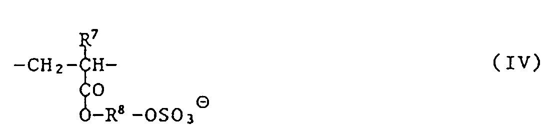 et
b) de 95 à 0 % en moles de motifs structuraux identiques de formule V : 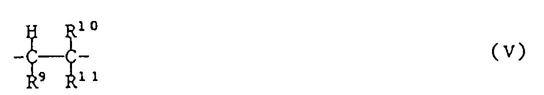 par rapport au polymère, où R⁷ est H ou le groupe méthyle, R⁸ est un radical alkylène en C₂-C₁₈ à chaîne droite ou ramifiée, poly(oxaalkyléne en C₂-C₆) comportant 2 à 6 groupes oxaalkylène, cycloalkylène en C₅-C₈, phénylène, benzylène ou xylylène, ou encore le groupe 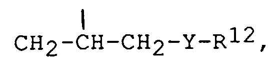 Y est -O-, 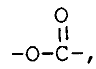 ou un groupe -N-(alkyle en C₁-C₄)-, et R¹² est un groupe alkyle en C₁-C₁₈, cycloalkyle en C₅-C₇, (alkyl en C₁-C₁₂)cycloalkyle en C₅-C₇, phényle, (alkyl en C₁-C₁₂)phényle, benzyle ou (alkyl en C₁-C₁₂)benzyle, R⁹ est H ou un groupe alkyle en C₁-C₆, -COOR¹² ou COO⁻, R¹⁰ est H, F, Cl, CN, ou un groupe alkyle en C₁-C₆, et R¹¹ est H, F, Cl, CN, R¹² est -O-, un groupe alkyle en C₁-C₁₂, -COO-, -COOR¹², -COOR⁸-OH, -OCO-R¹², ou le groupe phényle, auquel cas R⁸ et R¹¹ ont les significations données ci-dessus.

17. Composition selon la revendication 16, dans laquelle, dans la formule IV, R⁷ est H ou CH₃ et R⁸ est un groupe alkylène en C₂-C₆ à chaîne droite ou ramifiée, cyclopentylène ou cyclohexylène, et dans la formule V, R⁹ est H, R¹⁰ est H ou le groupe méthyle, et R¹¹ est -COOR¹² ou -COOR⁸OH.

18. Procédé pour préparer une composition selon la revendication 1, caractérisé en ce qu'on soumet à une polymérisation électrochimique, dans une solution aqueuse, aqueuse-organique ou organique, un composé hétéroaromatique en présence d'un polymère thermoplastique filmogène comportant des groupes alcool sulfaté : 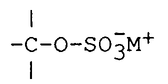 dans des motifs structuraux répétitifs, où M⁺ est un cation d'un métal alcalin ou ammonium, puis on enlève la composition de l'anode.

19. Procédé pour augmenter la conductivité électrique dans un film ou dans des fils de la composition selon la revendication 1, caractérisé en ce qu'on étire le fil ou les fils à une température inférieure à la température de fusion ou de décomposition.

20. Procédé selon la revendication 19, caractérisé en ce qu'on procède à l'étirage à une température qui s'écarte de moins de 20°C, dans un sens ou dans l'autre, de la température de transition vitreuse.

21. Utilisation d'une composition selon la revendication 1 en tant que conducteurs électriques, électrodes, cathodes pour batteries, matériaux de blindage électromagnétiques, fils électroconducteurs, capteurs, matériaux d'emballage antistatique ou matériaux de scellement électroconducteurs.

22. Utilisation des films ou fibres préparés par le procédé selon la revendication 19, en tant que conducteurs électriques, électrodes, cathodes pour batteries, matériaux de blindage électromagnétiques, fils électroconducteurs, capteurs, matériaux d'emballage antistatique ou matériaux de scellement électroconducteurs.
